# EUROPEAN PATENT APPLICATION

(11) **EP 4 661 142 A1**
(43) Date of publication of application: **10.12.2025**
(21) Application number: 24785174.4
(22) Date of filing: 02.04.2024
(51) Int. Cl.: H01M 10/058, H01M 10/44, H01M 10/04

(54) **BATTERY ACTIVATION DEVICE**

(30) Priority: 07.04.2023 KR 20230046193
(71) Applicant: LG Energy Solution, Ltd., Seoul 07335 (KR)
(72) Inventor: JUNG, Jea Bong, Daejeon 34122 (KR); CHA, Ji Hoon, Daejeon 34122 (KR); AHN, Chang Bum, Daejeon 34122 (KR); CHOI, Byung Man, Daejeon 34122 (KR); WOO, Min Ki, Daejeon 34122 (KR); SEO, Jun Yeong, Daejeon 34122 (KR)
(74) Representative: Goddar, Heinz J.
(86) International application number: PCT/KR2024/004257
(87) International publication number: WO 2024/210469

(57) **Abstract**

A battery formation device is provided according to exemplary embodiments of the present invention. The battery formation device comprises: a horizontal frame, first and second clamp holders configured to be moved along the horizontal frame, a vertical frame on the horizontal frame, a drive shaft coupled to the vertical frame, first and second arms coupled to the drive shaft, a first guide connected to the first arm, and a second guide connected to the second arm.

## Description

### [Cross Reference to Related Application]

The present application claims the benefit of priority based on Korean Patent Application No. 10-2023-0046193, filed on April 7, 2023, and the entire contents of this Korean patent application is incorporated herein by reference.

### [Technical Field]

The present invention relates to a battery formation device.

### [Background Art]

A secondary battery can be charged and discharged a plurality of times unlike a primary battery. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

The manufacture of a secondary battery includes an electrode process including mixing, coating, roll pressing, slitting, and notching processes, an assembly process of embedding an electrode assembly into a case, and a formation process of electrically activating and stabilizing battery cells. After the formation process, the battery cells may be stacked to form a cell stack. The cell stack may be mounted in the housing together with a module frame or be mounted directly in the housing without the module frame.

### [Disclosure]

### [Technical Problem]

The present invention is directed to providing a battery formation device with improved reliability.

### [Technical Solution]

Exemplary embodiments of the present invention provide a battery formation device. The battery formation device includes a horizontal frame, first and second clamp holders configured to be moved along the horizontal frame, a vertical frame on the horizontal frame, a drive shaft coupled to the vertical frame, first and second arms coupled to the drive shaft, a first guide connected to the first arm, and a second guide connected to the second arm.

The first and second clamp holders may be configured to fix a battery cell.

The first and second guides may be configured to fix a gas pocket of the battery cell.

The first guide may be perpendicular to the first arm.

The second guide may be perpendicular to the second arm.

The first and second arms may be configured to be rotated about the drive shaft.

The first and second arms may be in contact with the first and second clamp holders, respectively.

The first and second arms may be configured to be rotated by the first and second clamp holders, respectively.

A length of each of the first and second arms may be in a range of 100 mm to 160 mm.

A distance between the horizontal frame and the drive shaft may be in a range of 40 mm to 70 mm.

A length of each of the first and second guides may be in a range of 50 mm to 100 mm.

A thickness of each of the first and second guides may be in a range of 2 mm to 3 mm.

The first and second arms may be spaced apart from the first and second clamp holders, respectively.

The drive shaft may include a shaft configured to rotate the first and second arms.

Exemplary embodiments of the present disclosure provide a battery formation device. The battery formation device includes a horizontal frame, first and second clamp holders configured to be moved along the horizontal frame so as to fix a battery cell, a first arm in contact with the first clamp holder, a second arm in contact with the second clamp holder, a first guide connected to the first arm, and a second guide connected to the second arm.

The first arm may be configured to be rotated by movement of the first clamp holder.

The second arm may be configured to be rotated by movement of the second clamp holder.

A first end of the first arm may be in contact with the first clamp holder.

A second end, which is an opposite end to the first end, of the first arm may be connected to the first guide.

### [Advantageous Effects]

A battery formation device according to exemplary embodiments of the present disclosure includes guides configured to flatten a gas pocket of a battery cell. Accordingly, it is possible to prevent damage to the gas pocket and the battery cell during unloading of the battery cell.

Effects achievable from exemplary embodiments of the present disclosure are not limited to the above-described effects, and other effects that are not described herein will be clearly derived and understood by those of ordinary skilled in the art to which the exemplary embodiments of the present disclosure pertain from the following description. That is, unintended effects achieved when the exemplary embodiments of the present disclosure are implemented are derivable by those of ordinary skilled in the art from the exemplary embodiments of the present disclosure.

### Brief Description of the Drawings

FIG. 1 is a perspective view of a battery formation device according to exemplary embodiments.
FIG. 2 is a flowchart of a secondary battery manufacturing method according to exemplary embodiments.
FIG. 3 is a perspective view for describing a secondary battery manufacturing method according to exemplary embodiments.
FIG. 4 is a perspective view for describing a secondary battery manufacturing method according to exemplary embodiments.
FIG. 5 is a perspective view of a battery formation device according to exemplary embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### First Embodiment

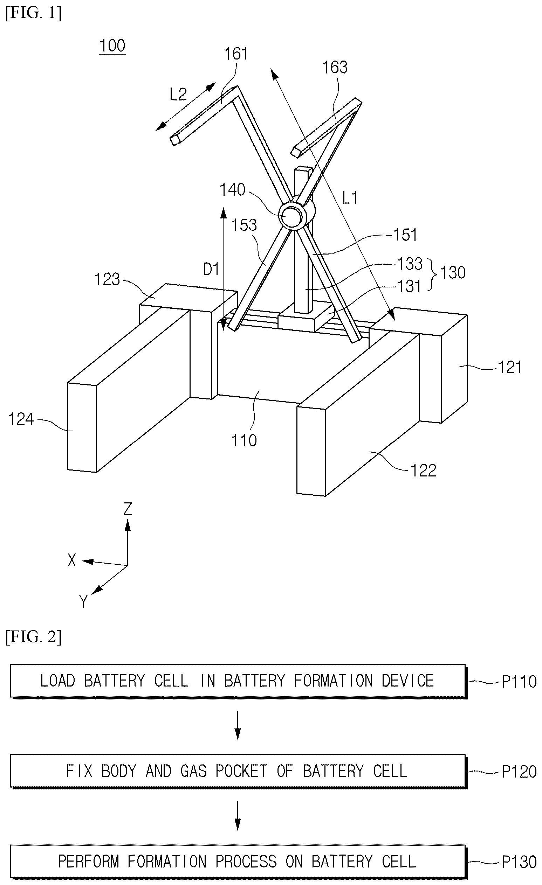

FIG. 1 is a perspective view of a battery formation device 100 according to exemplary embodiments.

Referring to FIG. 1, the battery formation device 100 may include a horizontal frame 110, a first clamp holder 121, a first clamp 122, a second clamp holder 123, a second clamp 124, a vertical frame 130, a drive shaft 140, a first arm 151, a second arm 153, a first guide 161, and a second guide 163.

The battery formation device 100 may be configured to perform a formation process of a battery cell. Here, the formation process of the battery cell may include repetition of aging, charging, and discharging of the battery cell. Here, the aging of the battery cell is to store the battery cell at room temperature for a certain time (e.g., 30 minutes to 3 hours) to cause an electrolyte injected in the assembly process to sufficiently permeate a positive electrode and a negative electrode of the battery cell. The electrolyte may be uniformly dispersed in a battery by the aging of the battery cell and thus the movement of ions between the positive electrode and the negative electrode may be promoted. Subsequently, as the electrolyte is decomposed due to repeated charging and discharging, a solid electrolyte interphase (SEI) film may be formed on a surface of the negative electrode. The SEI film may block electrons and allow lithium ions to pass therethrough. The SEI film may increase the safety of the battery cell and enhance the performance and lifetime of the battery. The battery cell after being charged undergoes secondary aging at a high temperature of 40 to 70 °C and thus uniformity (e.g., thickness uniformity) of the SEI film may be improved. The formation process of the battery cell may include degassing to remove a gas generated in the battery during aging and charging.

The horizontal frame 110 may support other elements of the battery formation device 100. The horizontal frame 110 may extend in an X-axis direction.

The first clamp holder 121 and the second clamp holder 123 may be coupled to the horizontal frame 110. The first clamp holder 121 and the second clamp holder 123 may be configured to be moved along the horizontal frame 110 in the X-axis direction. The first clamp holder 121 and the second clamp holder 123 may be moved toward each other or moved to be away from each other.

Each of the first and second clamps 122 and 124 may have a plate shape. Each of the first and second clamps 122 and 124 may be substantially perpendicular to the X-axis direction. Each of the first and second clamps 122 and 124 may be parallel to a Y-axis direction and a Z-axis direction. The first and second clamps 122 and 124 may be substantially parallel to each other.

Here, the X-axis direction, the Y-axis direction, and the Z-axis direction may be substantially perpendicular to one another. Each of the X-axis direction and the Y-axis direction may be substantially parallel to the ground of a space in which the battery formation device 100 is installed. The Z-axis direction may be substantially perpendicular to the ground of the space in which the battery formation device 100 is installed.

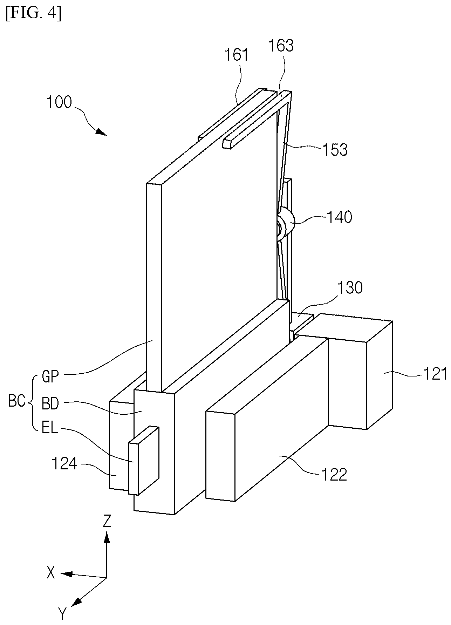

The first clamp 122 may be connected to the first clamp holder 121. The second clamp 124 may be connected to the second clamp holder 123. The first and second clamps 122 and 124 may be moved by movement of the first and second clamp holders 121 and 123. As the first and second clamps 122 and 124 are moved close to each other by the first and second clamp holders 121 and 123, the first and second clamps 122 and 124 may fix a battery cell BC (see FIG. 4). The first and second clamps 122 and 124 may press the battery cell BC (see FIG. 4) to fix the battery cell BC therebetween.

When the first and second clamps 122 and 124 are moved toward each other or moved to be away from each other, a minimum distance and a maximum distance between the first and second clamps 122 and 124 may be determined by a width of the fixed battery cell BC in the X-axis direction. The minimum distance between the first and second clamps 122 and 124 may be less than or equal to the width of the battery cell BC (see FIG. 4) in the X-axis direction. The maximum distance between the first and second clamps 122 and 124 may be in a range of about 35 mm to about 45 mm.

The vertical frame 130 may be on the horizontal frame 110. The vertical frame 130 may include a support 131 and a frame bar 133. The support 131 may support the frame bar 133. The frame bar 133 may be connected to the support 131. The frame bar 133 may have a bar shape extending in the Z-axis direction.

The drive shaft 140 may be coupled to the frame bar 133. The drive shaft 140 may fix a portion of the first arm 151 coupled to the drive shaft 140 and a portion of the second arm 153 coupled to the drive shaft 140. According to embodiments, a distance D1 between the horizontal frame 110 and the drive shaft 140 may be in a range of about 40 mm to about 70 mm.

The first and second arms 151 and 153 may be coupled to the drive shaft 140. Each of the first and second arms 151 and 153 may be configured to be rotated about the drive shaft 140. According to exemplary embodiments, a length L1 of each of the first and second arms 151 and 153 may be in a range of about 100 mm to about 160 mm.

According to exemplary embodiments, the first arm 151 may be configured to be rotated by the first clamp holder 121. According to exemplary embodiments, the first arm 151 may be rotated by movement of the first clamp holder 121.

A first end of the first arm 151 may be in contact with the first clamp holder 121. When the first clamp holder 121 is moved toward the second clamp holder 123 in the X-axis direction, the first clamp holder 121 may push the first end of the first arm 151 in the X-axis direction. Accordingly, a clockwise torque may be applied to the first arm 151 and thus the first arm 151 may be rotated in a clockwise direction.

When the first clamp holder 121 is moved in the X-axis direction to be away from the second clamp holder 123, the first clamp holder 121 may provide a space in which the first arm 151 may be rotated in a counterclockwise direction. A counterclockwise torque may be applied to the first arm 151 due to the weight of the first guide 161 connected to a second end of the first arm 151 and thus the first arm 151 may be rotated in the counterclockwise direction. That is, the first arm 151 may be rotated due to the movement of the first clamp holder 121 even when the first clamp holder 121 is moved in the X-axis direction to be away from the second clamp holder 123. The first end of the first arm 151 and the second end of the first arm 151 may be opposite to each other.

According to exemplary embodiments, the second arm 153 may be configured to be rotated by the second clamp holder 123. According to exemplary embodiments, the second arm 153 may be rotated by the movement of the second clamp holder 123.

A first end of the second arm 153 may be in contact with the second clamp holder 123. When the second clamp holder 123 is moved toward the first clamp holder 121 in the X-axis direction, the second clamp holder 123 may push the first end of the second arm 153 in the X-axis direction. Accordingly, a counterclockwise torque may be applied to the second arm 153 and thus the second arm 153 may be rotated in the counterclockwise direction.

When the second clamp holder 123 is moved in the X-axis direction to be away from the first clamp holder 121, the second clamp holder 123 may provide a space in which the second arm 153 may be rotated in the clockwise direction. A clockwise torque may be applied to the second arm 153 due to the weight of the second guide 163 connected to a second end of the second arm 153, and thus, the second arm 153 may be rotated in the clockwise direction. That is, the second arm 153 may be rotated due to the movement of the second clamp holder 123 even when the second clamp holder 123 is moved in the X-axis direction to be away from the first clamp holder 121. The first end and the second end of the second arm 153 may be opposite to each other.

The above description about the directions in which the first and second arms 151 and 153 are rotated is provided to describe a relationship between the first and second arms 151 and 153 and the first and second clamp holders 121 and 123 and thus should not be understood as limiting the technical idea of the present disclosure in any sense. It will be obvious to those of ordinary skill in the art that the terms "clockwise direction" and "counterclockwise direction" used to describe the rotation of the first and second arms 151 and 153 may vary according to a direction in which the first and second arms 151 and 153 are viewed.

The first guide 161 may be connected to the first arm 151. The first guide 161 may be substantially perpendicular to the first arm 151 but embodiments are not limited thereto. The first guide 161 may be oblique to the first arm 151. The second guide 163 may be connected to the second arm 153. The second guide 163 may be substantially perpendicular to the second arm 153 but embodiments are not limited thereto. The second guide 163 may be oblique to the second arm 153.

According to exemplary embodiments, a length L2 of each of the first and second guides 161 and 163 may be in a range of about 50 mm to about 100 mm. According to exemplary embodiments, a thickness of each of the first and second guides 161 and 163 may be in a range of about 2 mm to about 3 mm.

### Second Embodiment

FIG. 2 is a flowchart of a secondary battery manufacturing method according to exemplary embodiments.

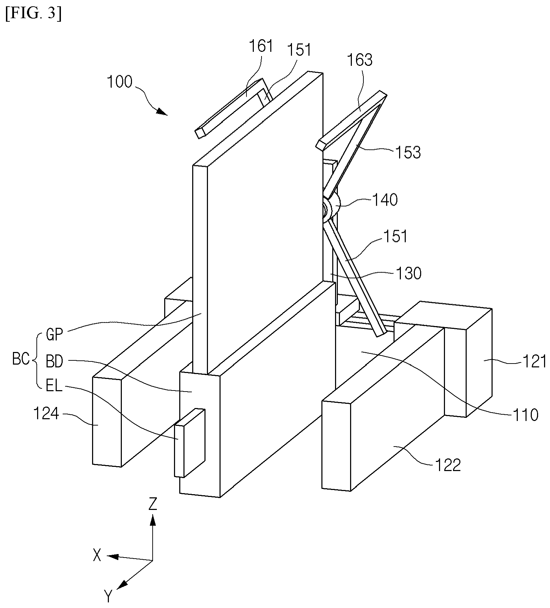

FIGS. 3 and 4 are perspective views for describing a secondary battery manufacturing method according to exemplary embodiments. More specifically, FIGS. 3 and 4 illustrate operations of the battery formation device 100.

Referring to FIGS. 1 to 3, in P110, a battery cell BC may be loaded in the battery formation device 100. The loading of the battery cell BC may be performed by a pick-and-place machine.

The battery cell BC may include a body BD, a gas pocket GP, and an electrode lead EL. In FIG. 3, bidirectional battery cells BC are loaded into the battery formation device 100 but unidirectional battery cells may be processed by the battery formation device 100. The gas pocket GP and the electrode lead EL may be spaced apart from each other. The gas pocket GP and the electrode lead EL may be on different sides of the body BD.

The body BD of the battery cell BC loaded in the battery formation device 100 may be interposed between the first clamp 122 and the second clamp 124. The gas pocket GP of the battery cell BC loaded in the battery formation device 100 may be interposed between a first guide 161 and a second guide 163.

The battery cell BC is a basic unit of a lithium ion battery, that is, a secondary battery. The battery cell BC may be a pouch type battery cell. The battery cell BC may include a pouch case, and an electrode assembly in the pouch case. The electrode assembly in the pouch case includes a positive electrode, a negative electrode, and a separator between the positive electrode and the negative electrode.

The pouch case may be provided by performing a forming process and a sealing process on the pouch film. The pouch film may include an inner resin layer, a metal layer, and an outer resin layer. The inner resin layer may have thermal adhesion, thus enabling sealing of a pouch film. The inner resin layer may include, for example, a polyolefin-based material. The metal layer may include an alloy of iron, carbon, chromium and manganese, an alloy of iron, chromium and nickel, or aluminum.

The electrode assembly may be, but is not limited to, a jelly-roll type electrode assembly or a stack type electrode assembly. The jelly-roll type electrode assembly includes a positive electrode and a negative electrode that are wound, and a separator interposed therebetween. The stack type electrode assembly may include a plurality of positive electrodes and a plurality of negative electrodes that are stacked sequentially, and a plurality of separators interposed therebetween. The battery cell BC of FIG. 3 may be a product obtained before performing the formation process after a pouch forming process and an electrolyte injection process.

Next, referring to FIGS. 1 and 4, in P120, the battery formation device 100 may fix the body BD and the gas pocket GP of the battery cell BC.

The body BD of the battery cell BC may be fixed by the first clamp 122 and the second clamp 124. The first clamp 122 and the second clamp 124 may be moved by the first clamp holder 121 and the second clamp holder 123 to a position at which the gas pocket GP is to be pressed. The body BD of the battery cell BC may be pressed in a lateral direction (e.g., the X-axis direction) by the first clamp 122 and the second clamp 124. Accordingly, it is possible to prevent the volume of the body BD of the battery cell BC from being increased due to a gas generated due to the charging and discharging of the battery cell BC. The gas generated due to the charging and discharging of the battery cell BC may be collected by the gas pocket GP. The collected gas may be removed by cutting a part of the gas pocket GP after the formation process is completed.

The gas pocket GP of the battery cell BC may be fixed by the first guide 161 and the second guide 163. The first arm 151 and the second arm 153 may be rotated by the first clamp holder 121 and the second clamp holder 123, and the first guide 161 and the second guide 163 may fix the gas pocket GP by rotation of the first arm 151 and the second arm 153.

The gas pocket GP of the battery cell BC includes only a thermally fused pouch film and a gas and thus is flexible. Accordingly, the gas pocket GP of the battery cell BC may be easily bent when the pick-and-place machine puts down the battery cell BC. When the battery cell BC is unloaded from the battery formation device 100, the pick-and-place machine grips the gas pocket GP. Accordingly, the gas pocket GP is bent and thus may decrease the reliability of the operation of the pick-and-place machine and cause damage to the gas pocket GP due to the pick-and-place machine.

According to exemplary embodiments, the first guide 161 and the second guide 163 may flatten the bent gas pocket GP, as well as fixing the gas pocket GP. Accordingly, the battery formation device 100 according to exemplary embodiments may provide a solution to problems such as a reduction of operation reliability and damage to the gas pocket GP during the unloading of the battery cell BC.

As a non-limiting example, the first clamp holder 121 and the second clamp holder 123 may be moved toward each other until the first arm 151 and the second arm 153 are brought into contact with the support 131. The size of the support 131 may be determined such that when the first clamp holder 121 and the second clamp holder 123 are moved to a minimum distance, the first clamp 122 and the second clamp 124 may press the body BD of the battery cell BC and the first guide 161 and the second guide 163 may flatten the gas pocket GP of the battery cell BC.

Next, in P130, the formation process may be performed on the battery cell BC. The formation process may include repetitive charging and discharging of the battery cell BC as described above. The charging and discharging of the battery cell BC includes supplying a current to the electrode lead EL. The battery cell BC that is completely charged or discharged may be unloaded from the battery formation device 100 to perform the aging process or cut the gas pocket GP. Before unloading the battery cell BC, the first clamp holder 121 and the second clamp holder 123 may be moved to be away from each other. Accordingly, the first clamp 122 and the second clamp 124 may be separated from the body BD, and the first guide 161 and the second guide 163 may be separated from the gas pocket GP.

### Third Embodiment

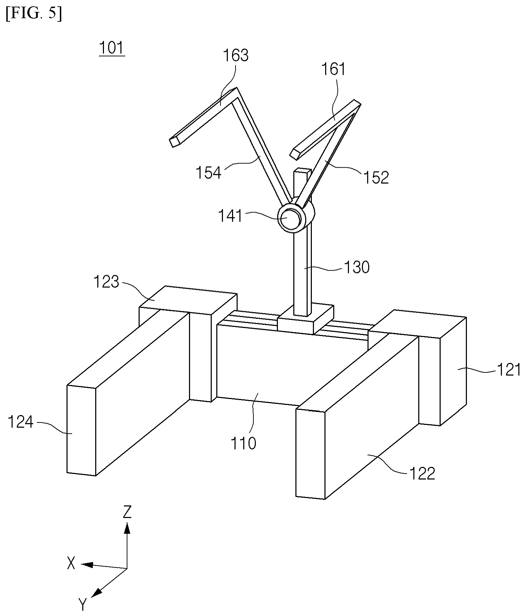

FIG. 5 is a perspective view of a battery formation device 101 according to other exemplary embodiments.

Referring to FIG. 5, the battery formation device 101 may include a horizontal frame 110, a first clamp holder 121, a first clamp 122, a second clamp holder 123, a second clamp 124, a vertical frame 130, a drive shaft 141, a first arm 152, a second arm 154, a first guide 161, and a second guide 163.

The horizontal frame 110, the first clamp holder 121, the first clamp 122, the second clamp holder 123, the second clamp 124, the vertical frame 130, the first guide 161, and the second guide 163 are substantially the same as those described above with reference to FIGS. 1 to 4 and thus a redundant description thereof is omitted here.

According to exemplary embodiments, the first arm 152 may be spaced apart from the first clamp holder 121, and the second arm 154 may be spaced apart from the second clamp holder 123. According to exemplary embodiments, the first arm 152 and the second arm 154 may be configured to be rotated by power transmitted thereto by the drive shaft 141. The battery formation device 101 may include a motor (e.g., a servo motor) configured to supply torque to the drive shaft 141. According to exemplary embodiments, the motor may be installed in the vertical frame 130 but embodiments are not limited thereto. The drive shaft 141 may include a shaft configured to transmit power from the motor.

The motor may synchronize the rotation of the first and second arms 152 and 154 with the movement of the first and second clamp holders 121 and 123 but embodiments are not limited thereto. After the body BD (see FIG. 4) of the battery cell BC (see FIG. 4) is fixed by the first clamp holder 121 and the second clamp holder 123, the first and second arms 152 and 154 may be rotated to flatten the gas pocket GP (see FIG. 4).

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A battery formation device comprising:
a horizontal frame;
first and second clamp holders configured to be moved along the horizontal frame;
a vertical frame on the horizontal frame;
a drive shaft coupled to the vertical frame;
first and second arms coupled to the drive shaft;
a first guide connected to the first arm; and
a second guide connected to the second arm.

2. The battery formation device of claim 1, wherein the first and second clamp holders are configured to fix a battery cell, and
the first and second guides are configured to fix a gas pocket of the battery cell.

3. The battery formation device of claim 1, wherein the first guide is perpendicular to the first arm, and
the second guide is perpendicular to the second arm.

4. The battery formation device of claim 1, wherein the first and second arms are configured to be rotated about the drive shaft.

5. The battery formation device of claim 1, wherein the first and second arms are in contact with the first and second clamp holders, respectively.

6. The battery formation device of claim 1, wherein the first and second arms are configured to be rotated by the first and second clamp holders, respectively.

7. The battery formation device of claim 1, wherein a length of each of the first and second arms is in a range of 100 mm to 160 mm.

8. The battery formation device of claim 1, wherein a distance between the horizontal frame and the drive shaft is in a range of 40 mm to 70 mm.

9. The battery formation device of claim 1, wherein a length of each of the first and second guides is in a range of 50 mm to 100 mm.

10. The battery formation device of claim 1, wherein a thickness of each of the first and second guides is in a range of 2 mm to 3 mm.

11. The battery formation device of claim 1, wherein the first and second arms are spaced apart from the first and second clamp holders, respectively.

12. The battery formation device of claim 1, wherein the drive shaft includes a shaft configured to rotate the first and second arms.

13. A battery formation device comprising:
a horizontal frame;
first and second clamp holders configured to be moved along the horizontal frame so as to fix a battery cell;
a first arm in contact with the first clamp holder;
a second arm in contact with the second clamp holder;
a first guide connected to the first arm; and
a second guide connected to the second arm,
wherein the first arm is configured to be rotated by movement of the first clamp holder, and
the second arm is configured to be rotated by movement of the second clamp holder.

14. The battery formation device of claim 13, wherein a first end of the first arm is in contact with the first clamp holder, and
a second end of the first arm is connected to the first guide, wherein the second end is an opposite end to the first end of the first arm.
